# FASCICULE DE BREVET EUROPEEN

(11) **EP 3 588 418 B1**
(45) Date de publication et mention de la délivrance du brevet: **25.11.2026**
(21) Numéro de dépôt: 19181850.9
(22) Date de dépôt: 21.06.2019
(51) Int. Cl.: G06Q 20/40

(54) **PROCÉDÉ DE RÉALISATION D'UNE TRANSACTION, TERMINAL, SERVEUR ET PROGRAMME D ORDINATEUR CORRESPONDANT**
VERFAHREN ZUR DURCHFÜHRUNG EINER TRANSAKTION, ENSTSPRECHENDER ENDGERÄT UND SERVER, UND ENTSPRECHENDES COMPUTERPROGRAMM
METHOD FOR PERFORMING A TRANSACTION, CORRESPONDING TERMINAL, SERVER AND COMPUTER PROGRAM

(30) Priorité: 29.06.2018 FR 1856009
(43) Date de publication de la demande: 01.01.2020
(73) Titulaire: Banks and Acquirers International Holding, 75015 Paris (FR)
(72) Inventeur: QUENTIN, Pierre, 95880 ENGHIEN LES BAINS (FR)
(74) Mandataire: Germain Maureau

(56) Documents cités:
- EP-A1- 3 163 487
- DE-A1- 102011 119 820
- GB-A- 2 541 013
- US-A1- 2014 270 336
- US-A1- 2015 269 698
- US-A1- 2016 155 123
- US-A1- 2018 181 964

## Description

### 1. Domaine de l'invention

L'invention concerne la sécurisation des paiements. Plus particulièrement, l'invention concerne la sécurisation des paiements effectués en utilisant un terminal de communication portable tel qu'un smartphone, une tablette ou encore une montre connectée. Par la suite ce type de paiement est appelé paiement mobile. Plus spécifiquement encore, un objet de la présente technique est d'augmenter le niveau de sécurité d'une transmission de données dans le cadre d'un paiement mobile réalisé avec un terminal de communication portable (par exemple un smartphone ou une tablette) et un document d'identité de l'utilisateur en possession du terminal de communication mobile et titulaire des données de paiement utilisées pour effectuer la transaction de paiement.

### 2. Art Antérieur

D'une manière générale, les paiements en ligne, dont les paiements mobiles représentent d'une part un type particulier et d'autre part une part croissante des paiements effectués chaque jour dans le monde. Ils peuvent être effectués par le biais de fournisseurs de paiement, tels que Paypal^{™}, ou en faisant appel à des organisations bancaires traditionnelles, en utilisant une carte bancaire de paiement.

Cependant, le paiement en ligne est marqué par un taux de fraude relativement élevé. En France, on estime qu'environ 5% des paiements en ligne effectués sur Internet sont frauduleux. Ces paiements frauduleux de cinq pour cent représentent environ trente-trois pour cent du coût total de la fraude. Il est donc nécessaire d'avoir des moyens d'une part d'identifier les tentatives de fraude et d'autre part de bloquer ces tentatives.

Un des problèmes dans les transactions par mobile est qu'elles sont effectuées en mode *"carte non présente"* (c.-à-d. CNP, pour *"card not present"* en anglais). Dans ce mode, aucun dispositif n'étant chargé de vérifier l'intégrité de la carte (comme par exemple un terminal de paiement), il n'est pas possible de vérifier que le détenteur de la carte possède le code PIN nécessaire pour valider une transaction : la carte de paiement n'est pas utilisée pour effectuer la transaction. Seules les données inscrites sur la carte le sont. Ces données peuvent être volées pour effectuer des transactions par des fraudeurs, éventuellement en utilisant d'autres applications marchandes, dans le cadre d'autres paiements mobiles. Accessoirement, le terminal de communication de l'utilisateur (qui comprend toutes les données des cartes de paiement utilisées par celui-ci), peut également être volé, donnant accès au voleur à l'ensemble des données de l'utilisateur et permettant au voleur d'effectuer des transactions frauduleuses.

Ainsi, dans le but de sécuriser les transactions effectuées en mode CNP, des systèmes et des méthodes ont été proposés pour résoudre ces problèmes de fraude. Ces méthodes posent des problèmes de commodité pour l'utilisateur ou d'autres problèmes de sécurité. C'est par exemple la méthode décrite dans le document de brevet WO2012053780. Dans ce document, un système et une méthode de vérification sont décrits. Plus particulièrement un procédé et un système utilisant des informations sur l'adresse MAC d'un terminal client sont décrits. Lors d'une transaction impliquant un paiement, un processus d'authentification est mis en œuvre dans lequel l'adresse MAC du terminal utilisé par l'utilisateur souhaitant effectuer un paiement est comparée à une adresse MAC de référence, définie ou obtenue par le serveur bancaire, serveur qui doit autoriser un paiement ou une transaction.

Cette méthode, bien que potentiellement intéressante, est néanmoins peu pratique. En effet, d'une part, cette méthode oblige l'utilisateur à toujours utiliser le même appareil pour effectuer un paiement (sauf à définir plusieurs appareils autorisés à effectuer une transaction). D'un autre côté, il existe de nombreuses méthodes pour falsifier une adresse MAC d'un périphérique. Plus particulièrement, la méthode décrite dans WO2012053780 est basée sur l'obtention d'une adresse MAC à partir d'un navigateur Web. Cependant, un pirate qui souhaite obtenir une adresse MAC d'un utilisateur n'aura aucune difficulté à obtenir cette adresse lorsqu'il saisira les données de carte de crédit de l'utilisateur en question, par exemple en utilisant une méthode consistant à se placer avant le serveur du commerçant (ou de l'éditeur de l'application utilisée pour le paiement). Ainsi, le procédé de WO2012053780 ne semble pas très utile puisque les informations complémentaires (l'adresse MAC du dispositif transactionnel) seraient aussi vulnérables que les autres. La méthode décrite aurait donc peu de chance de sécuriser réellement la transaction.

D'autres méthodes sont également disponibles. Certains impliquent de fournir à l'utilisateur des numéros de cartes bancaires uniques. Ces numéros sont fournis en fonction des besoins du client. Cette méthode est intéressante mais ne supprime pas la possibilité pour l'utilisateur d'utiliser ses propres informations de carte pour effectuer des transactions. D'autres méthodes, actuellement largement utilisées, consistent à transmettre un message de type SMS au client qui effectue une transaction pour s'assurer qu'il est le porteur de la carte. L'utilisateur doit saisir, au moment de la transaction, un mot de passe transmis dans le SMS. Par conséquent, la banque s'assure avec une probabilité raisonnable que celui qui effectue la transaction est l'utilisateur. Cette méthode présente deux inconvénients : d'une part, elle oblige l'utilisateur à fournir son numéro de téléphone à la banque avant toute transaction et de manière sécurisée ; d'autre part, et surtout cette méthode ne fonctionne que si la banque du client est également la banque qui gère la transaction pour le compte du commerçant, ce qui n'est pas nécessairement le cas, surtout à l'étranger, là précisément où la plus grande partie de la fraude est réalisée. Ainsi, la méthode susmentionnée n'est pas très efficace dans ce cas. Une autre méthode est décrite dans le document US2018/181964A1.

### 3. Résumé de l'invention

La méthode proposée par les inventeurs ne pose pas ces problèmes de l'art antérieur. En effet, il est proposé une méthode de sécurisation de la transaction basée sur l'identité de l'utilisateur effectuant un paiement mobile. L'invention est exposée dans le jeu de revendications joint.

Plus particulièrement, l'invention se rapporte à un procédé de réalisation d'une transaction d'un terminal de communication, souhaitant solliciter, auprès d'un serveur, par l'intermédiaire d'un réseau de communication, une acceptation d'une transaction impliquant l'utilisation de données de paiement (en mode CNP), lesquelles données de paiement étant issues d'un moyen de paiement. Selon l'invention cette transaction est sécurisée par l'utilisation d'un document d'identité de l'utilisateur.

Plus particulièrement, l'invention se rapporte à un procédé de traitement d'une transaction d'un terminal de communication, sollicitant auprès d'un serveur, par l'intermédiaire d'un réseau de communication, la mise en œuvre d'une transaction impliquant l'utilisation de données de paiement, procédé mis en œuvre au sein du terminal de communication, procédé caractérisé en ce qu'il comprend :
- une étape d'obtention d'un certificat d'identification d'utilisateur, ledit certificat d'identification d'utilisateur étant formé à partir d'un document d'identité en possession d'un utilisateur effectuant ladite transaction ;
- une étape d'insertion dudit certificat d'identification d'utilisateur, au sein d'une structure de données de transaction ;
- une étape de transmission de la structure de données de transaction audit serveur ;
- et lorsque le certificat d'identification d'utilisateur reçu par ledit serveur est valide, une étape de réception d'une donnée représentative de la validation de la transaction par ledit serveur.

Ainsi, il est possible de sécuriser une transaction qui est effectuée en mode carte non présente à l'aide d'une authentification d'un utilisateur, et donc de garantir une certaine validité des données mises en œuvre dans la transaction.

Selon une caractéristique particulière, l'étape d'obtention d'un certificat d'identification d'utilisateur comprend :
- une étape d'émission, à destination d'une carte d'identité numérique de l'utilisateur, d'une requête d'obtention d'un certificat d'identification d'utilisateur ;
- une étape de réception, en provenance de ladite carte d'identité numérique, dudit certificat d'identification d'utilisateur ;

Ainsi, un moyen électronique complémentaire permet de mettre en œuvre le certificat numérique d'identification, permettant de se baser sur une architecture d'identification distribuée, dont au moins un élément est sécurisé (la carte d'identité numérique de l'utilisateur).

Selon un mode de réalisation particulier, le procédé comprend en outre :
- une étape préalable de détermination d'une valeur de paramètre de certification, ledit paramètre de certification étant lié à ladite transaction ; et
- une étape d'insertion de la valeur paramètre de certification au sein de la requête d'obtention d'un certificat d'identification d'utilisateur.

Selon une caractéristique particulière, le paramètre de certification appartient au groupe comprenant :
- un paramètre d'une fonction de création dudit certificat d'identification d'utilisateur ;
- une valeur représentative d'un identifiant d'un commerçant ;
- une valeur représentative d'un identifiant de terminal de communication ;
- une valeur représentative de la transaction ;
- une valeur représentative d'une date et/ou d'une heure de la transaction.

Selon un mode de réalisation particulier, ladite étape d'insertion dudit certificat d'identification d'utilisateur, au sein d'une structure de données de transaction comprend une étape de sélection, parmi une pluralité de champs disponibles, d'un champs spécifique existant.

Selon une caractéristique particulière, le champ spécifique est le champ dédié à la réception du code de vérification visuel.

Selon un mode de réalisation particulier, le paramètre de certification comprend une donnée représentative d'un identifiant dudit terminal de communication et une donnée représentative d'une heure de la transaction.

Selon une caractéristique particulière, le certificat d'identification d'utilisateur est représentatif d'une opération de chiffrement effectué par ledit document d'identité, ladite opération de chiffrement étant effectuée par l'intermédiaire d'une communication de type NFC entre ledit terminal de communication de l'utilisateur et ledit document d'identité.

Selon un autre aspect, l'invention se rapporte également à un serveur de traitement d'une transaction, se présentant sous la forme d'un dispositif électronique connecté à un réseau de communication. Selon l'invention, un tel serveur comprend des moyens de réception, en provenance d'un terminal de communication. Un tel serveur comprend également :
- des moyens de réception d'une requête transactionnelle, comprenant au moins une donnée représentative d'un paiement à effectuer à partir dudit terminal de communication et un certificat d'identification d'utilisateur ;
- des moyens d'obtention d'une donnée de vérification de certificat d'identification d'utilisateur du document d'identité utilisé pour la transaction ;
- des moyens de détermination d'un certificat d'identification d'utilisateur courant associé aux données reçues au sein de la requête transactionnelle ;
- des moyens de comparaison des certificats d'identification d'utilisateur entre eux ;
- des moyens de fourniture, à une entité tierce d'une autorisation de transaction lorsque ladite comparaison est positive.

Selon un autre aspect, l'invention se rapporte également à un terminal de communication comprenant des moyens de traitement de transactions et des moyens de sollicitation auprès d'un serveur, par l'intermédiaire d'un réseau de communication, l'exécution d'une transaction impliquant l'utilisation de données de paiement. Un tel terminal de communication comprend :
- des moyens d'obtention d'un certificat d'identification d'utilisateur, ledit certificat d'identification d'utilisateur étant formé à partir d'un document d'identité en possession d'un utilisateur effectuant ladite transaction ;
- des moyens d'insertion dudit certificat d'identification d'utilisateur, au sein d'une structure de données de transaction ;
- des moyens de transmission de la structure de données de transaction audit serveur ;
- et des moyens de de réception d'une donnée représentative de la validation de la transaction par ledit serveur.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit un mode de réalisation du procédé de réalisation de transaction ;
- la figure 2 décrit un mode de réalisation dérivé du procédé de réalisation de transaction ;
- la figure 3 illustre une architecture d'un serveur apte à mettre en œuvre un procédé de réalisation de transaction ;
- la figure 4 illustre une architecture d'un client apte à mettre en œuvre un procédé de réalisation de transaction.

### 5. Description d'un mode de réalisation

### 5.1. Rappel du principe de l'invention

Comme exposé préalablement, il a été constaté que les solutions actuelles ne permettaient pas forcément d'assurer que le paiement mobile qui est réalisé est issu du porteur du moyen de paiement (d'une carte de paiement par exemple) dont les données sont utilisées. L'objet de la méthode proposée est de faire en sorte que, lors de l'utilisation de données du moyen de paiement en mode CNP (c'est-à-dire en saisissant les données de paiement dans un formulaire ou en utilisant les données de paiement sous leur forme textuelle pour créer une transaction), dans le cadre d'un paiement mobile, on puisse tout de même obtenir une certification de l'identité de l'utilisateur. En résumé, l'objectif est de sécuriser le mode CNP (utilisation textuelle des données de paiement) en y ajoutant des données d'identification de l'utilisateur (certificat d'identification d'utilisateur), données qui peuvent être vérifiées sans fondamentalement changer les habitudes de l'utilisateur et en toute discrétion.

Pour ce faire, les étapes conduisant à la validation de la transaction sont modifiées. Dans au moins un mode de réalisation de la méthode proposée, on obtient, en plus (ou à la place) des données de la carte de paiement (nom, numéro, date, code de vérification visuel - CVV), une donnée issue d'un document d'identité numérique (carte d'identité de l'utilisateur, passeport biométrique) en possession de l'utilisateur, de manière indépendante et complémentaire. Dans un mode de base, cette donnée est transmise par un document d'identité numérique et consiste en une signature numérique de certaines des données qui y sont enregistrées. Dans un autre mode, le terminal met en œuvre une représentation numérique d'un document d'identité classique, la représentation étant obtenue par le terminal de communication.

L'avantage procuré par une tel mise en œuvre réside dans le fait que la sécurité de la transaction est grandement améliorée : un serveur, en bout de chaine est en mesure de vérifier que les données qui sont fournies pour la mise en œuvre de la transaction (notamment les données de paiement, numéro de carte bancaire, validité, nom, etc.) sont corroborées par des données complémentaires (par exemple sous la forme d'un certificat d'authentification issu du document d'identité), ce certificat pouvant lui-même être vérifié par le serveur afin de confirmer l'identité de l'utilisateur. Ainsi, la mise en œuvre d'une fraude est nettement plus complexe puisqu'il est nécessaire de posséder plusieurs informations de nature différente pour pouvoir forger une transaction. Ainsi, un attaquant qui ne possède que les données de paiement de l'utilisateur n'est pas en mesure de forger une transaction valide. Le serveur est en possession de matériels cryptographiques particuliers (par exemple issus du document d'identité numérique) et/ou d'une copie du document d'identité (qu'il utilise pour produire des données cryptographiques identiques ou complémentaires de celles produites par le terminal de communication, lorsqu'une telle mise en œuvre est implémentée).

Ainsi, le principe général de la présente technique repose sur la mise en œuvre d'un terminal de communication comprenant des moyens d'obtention de données (comme par exemple un processeur ou un circuit comprenant un microprocesseur de traitement) en provenance d'un document d'identité du titulaire du moyen de paiement (carte d'identité numérique par exemple) dont les données sont utilisées pour effectuer la transaction de paiement. Plus spécifiquement, dans au moins un mode de réalisation, un moyen d'obtention de données en provenance d'un document d'identité numérique se présente sous la forme d'un module de communication sans contact, un tel module étant plus spécifiquement un module de communication en champ proche (NFC). Ce module reçoit de la part d'un processeur du terminal de communication, une instruction ou une commande d'obtention de données sans contact. Il peut s'agir d'une commande à caractère général. Par ailleurs, ce module est relié à une antenne sans contact. Cette antenne sans contact sert à émettre un signal à destination du document d'identité (la carte d'identité numérique et/ou le passeport numérique/biométrique) et à recevoir un signal en provenance de ce document d'identité. Pour ce faire, on met par exemple en œuvre une application, installée au sein du terminal de communication, application comprenant des moyens de détection de champs de saisie de données de moyens de paiement. Dans un autre mode de réalisation, il est possible d'utiliser un document d'identité classique. Ce mode de réalisation est explicité par la suite.

Ainsi, un document d'identité numérique se présente par exemple sous la forme d'une carte ou d'un document comprenant une antenne de type NFC *("Near Field Communication"),* cette antenne comprenant des moyens de transmission de données vers un récepteur, lorsqu'elle reçoit, de la part de ce récepteur, une requête en ce sens (la requête prenant par exemple la forme d'un signal électromagnétique). L'antenne, appelé antenne sans contact, peut être reliée à un processeur. Ce processeur peut par exemple être la puce de la carte à puce ou un processeur supplémentaire noyé dans le substrat de la carte (tout comme l'antenne). Accessoirement, un document d'identité numérique peut également se présenter sous la forme d'un terminal de communication (un deuxième terminal de communication), lequel est muni de moyens de transmission de données sans contact et éventuellement d'une application spécifiquement destinée à transmettre des données équivalentes ou identiques à des données de document d'identité numérique. Une telle application peut par exemple être une application de sécurité, installée au sein du terminal de communication, et qui conserve ces données de manière sécurisée. Dans ce cas, par exemple, la technique est mise en œuvre en apposant ce deuxième terminal de communication sur le premier terminal de communication. Une telle mise en œuvre est tout à fait envisageable dans la mesure où de nombreuses personnes disposent à la fois d'une tablette et d'un téléphone intelligent, le téléphone intelligent disposant d'une application « de sécurité », par exemple installée au sein d'un environnement sécurisé, tandis que la tablette est utilisée de manière plus générale et plus libre par plusieurs personnes du foyer, cette tablette n'étant pas destinée à contenir des données confidentielles.

Un cas d'usage général est le suivant :
- à partir d'une application « marchande », installée sur le terminal de communication (application spécifique à un marchand, ou application générique de type « navigateur »), l'utilisateur souhaite effectuer un achat de produit ou de service ;
- lorsqu'il valide sa commande, l'utilisateur doit fournir des données permettant le paiement (nom, numéro, date, CVV) : ces données sont par exemple saisies par l'utilisateur lui-même (dans des champs de saisie prévus à cet effet) ou encore « automatiquement » saisies par une application de paiement (par exemple *Google Pay^{™}, Samsung Pay^{™}, Apple Pay^{™},* ces applications sous « hébergeant » de manière sécurisée les données de paiement fournies par l'utilisateur) ou encore une application bancaire ;
- un module applicatif spécifique, intégré ou séparé de l'éventuelle application de paiement utilisée, détecte la nécessité de paiement et requiert, auprès de l'utilisateur, que celui-ci appose son document d'identité numérique à proximité de l'interface sans contact correspondante du terminal de communication (située en règle générale au dos du terminal de communication) ;
- le procédé de sécurisation de la présente technique est alors mis en œuvre, à partir d'un mécanisme mis en œuvre entre le document d'identité (Docld) et le terminal de communication (ComT), et un serveur transactionnel (SrvT) : une première étape de ce procédé abouti à l'obtention d'une donnée particulière à partir du document d'identité, cette donnée étant appelée certificat d'identification d'utilisateur ; le certificat d'identification d'utilisateur, obtenu à partir du document d'identité de l'utilisateur, est utilisé, dans une deuxième étape du procédé, pour certifier que la transaction est menée par l'utilisateur avec le document d'identité « en main », et non pas seulement avec les données du moyen de paiement de l'utilisateur (par exemple les données inscrites sur la carte d'identité numérique).

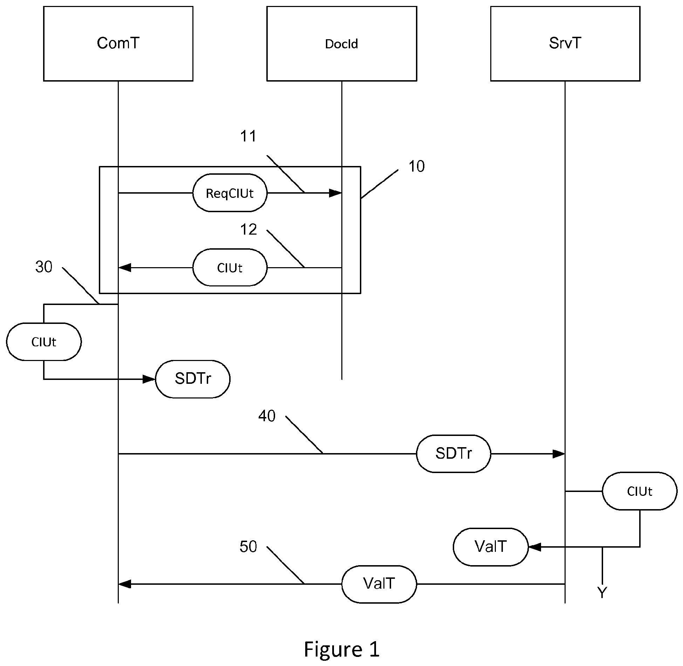

Ce procédé de sécurisation décrit en relation avec la figure 1 comprend :
- une étape d'obtention (10) d'un certificat d'identification d'utilisateur (ClUt), ledit certificat d'identification d'utilisateur (ClUt) étant formé à partir d'un document d'identité en possession de l'utilisateur ;
- une étape d'insertion (30) dudit certificat d'identification d'utilisateur (ClUt), au sein d'une structure de données de transaction (SDTr) ;
- une étape de transmission (40) de la structure de données de transaction (SDTr) audit serveur ;
- et lorsque le certificat d'identification d'utilisateur reçu par ledit serveur est valide, une étape de réception (50) d'une donnée représentative de la validation (ValT) de la transaction par ledit serveur.

Lorsque le document d'identité est un document d'identité numérique, l'étape d'obtention du certificat d'identification d'utilisateur comprend :
- une étape d'émission (11), à destination de ladite carte d'identité numérique dont les données sont utilisées pour la transaction, d'une requête d'obtention d'un certificat d'identification d'utilisateur (ReqClUt) ;
- une étape de réception (12), en provenance de ladite carte d'identité numérique, dudit certificat d'identification d'utilisateur (ClUt) ;

Les données utilisées pour la transaction comprennent donc, en sus des données usuelles (nom, numéro, date de validité), une donnée complémentaire (certificat d'identification d'utilisateur) directement issue du document d'identité lui-même. Ces données sont transmises, par l'intermédiaire des interfaces usuelles, au serveur (SrvT) en charge de traiter la transaction. Le traitement de la transaction comprend une phase complémentaire qui consiste à vérifier que le certificat d'identification d'utilisateur reçu est conforme, par rapport au certificat d'identification d'utilisateur attendu. Ainsi, cette vérification est effectuée par un serveur qui possède les données cryptographiques nécessaires à la vérification du certificat d'identification d'utilisateur. Il s'agit donc en règle générale d'un serveur transactionnel possédant des données utilisées par le document d'identité (donc par exemple le serveur bancaire de l'utilisateur qui entre en possession de ces données au moment de l'inscription de l'utilisateur, i.e. lorsque l'utilisateur devient client de la banque). Cependant, le prestataire de services de paiement (la banque) peut déléguer, à des tiers de confiance, ces opérations de validation des transactions, et peut ainsi autoriser un autre serveur (une autre entité) à effectuer ces opérations à sa place.

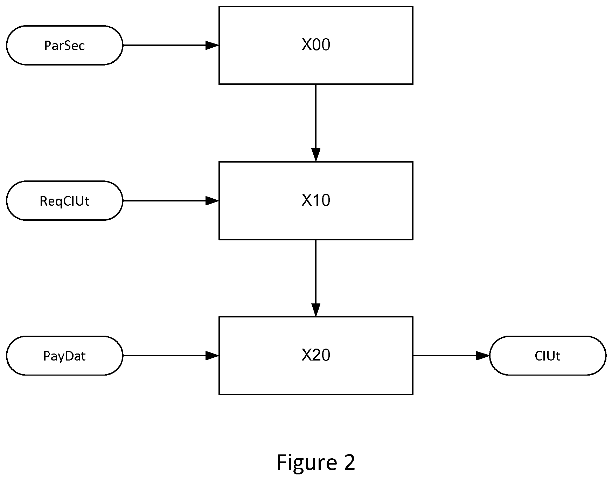

Un mode de réalisation particulier de la création du certificat d'identification d'utilisateur est mise en œuvre par le document d'identité numérique lui-même comme explicité en relation avec la figure 2. Le document d'identité numérique reçoit (X10), en provenance du terminal de communication, une requête d'établissement d'un code d'authentification. La transmission de cette requête fait suite à un premier échange (X00) (handshake) entre le terminal de communication et le document d'identité numérique, handshake au cours duquel des paramètres de sécurisation de transaction (ParSec) peuvent être échangés. A réception de la requête d'établissement d'un certificat d'identification d'utilisateur, le document d'identité numérique utilise une ou plusieurs données du document d'identité numérique (IdDat) pour générer (X20) un certificat d'identification d'utilisateur, lequel est sécurisé par l'utilisation d'un secret détenu au mois (voire au plus) par le document d'identité numérique lui-même. Le certificat d'identification d'utilisateur est alors transmis au terminal de communication afin qu'il puisse ajouter celui-ci aux données transmises au serveur (par l'intermédiaire d'un réseau de communication) auquel le terminal de communication est connecté.

Le certificat d'identification d'utilisateur peut être généré de plusieurs manières différentes. Par exemple, le document d'identité numérique peut générer une signature numérique des données de paiement (nom, numéro, date, CVV) et transmettre cette signature au terminal de communication. Les données sont signées à l'aide par exemple d'une clé privée de la carte. Les données (nom N1, numéro N2, date D, cryptogramme C) sont par exemple concaténées (N1|N2|D|C) pour former une chaine de caractères CC, sur laquelle une opération cryptographique est appliquée, en utilisant la clé privée (KPriv) du document d'identité numérique. Cette clé privée (KPriv) n'est détenue que par le document d'identité numérique (la clé publique a été transmise au serveur transactionnel par un autre biais, comme explicité précédemment). Une telle mise en œuvre permet d'assurer que seul le serveur en possession de l'information pertinente sera à même de déchiffrer le certificat, et donc de valider la transaction.

Dans un autre mode de réalisation, le certificat d'identification d'utilisateur n'est pas l'unique donnée permettant de valider la transaction. Dans ce mode de réalisation, la donnée validant ou non la transaction est un identifiant codé du terminal de communication de l'utilisateur, identifiant qui est « codé » par le document d'identité numérique, pour produire un certificat d'identification d'utilisateur du terminal de communication. Le certificat d'identification d'utilisateur du terminal de communication (à partir duquel la transaction est réalisée) est ainsi obtenu à partir d'une opération effectuée par le document d'identité numérique. Le certificat d'identification d'utilisateur du terminal de communication devient l'information permettant de délivrer l'autorisation de transaction (c'est-à-dire de valider qu'une transaction peut être réalisée). Ce mode de réalisation présente plusieurs avantages. En premier lieu, ce mode de réalisation permet de s'affranchir des problématiques de récupération de montant de transaction (montant qui n'est pas nécessairement disponible au niveau du terminal lui-même). En deuxième lieu, une telle mise en œuvre permet au serveur (bancaire), à réception du certificat d'identification d'utilisateur du terminal de communication, de déchiffrer celui-ci à l'aide de la clé publique du document d'identité numérique, et de vérifier que l'identifiant du terminal de communication correspond à un identifiant « autorisé » par le serveur (bancaire ou transactionnel) ce qui permet d'ajouter un niveau de sécurisation supplémentaire. D'une manière générale, le terminal de communication peut paramétrer le certificat d'identification d'utilisateur (et donc utiliser un paramètre de certification qu'il transmet au document d'identité), afin de rendre celui-ci unique (c'est-à-dire non utilisable une deuxième fois). Plus particulièrement, parmi les paramètres de certifications permettant de conférer une unicité au certificat d'identification d'utilisateur, on peut citer :
- un paramètre d'une fonction de création dudit certificat d'identification d'utilisateur : ce paramètre permet de déterminer par exemple l'ordre de concaténation des données d'identité, ou encore ce paramètre peut fournir une fonction d'association des données d'identité ;
- une valeur représentative d'un identifiant d'un commerçant : cette valeur peut être fournie par le commerçant ou par l'éditeur de l'application sur laquelle le paiement est initié ;
- une valeur représentative d'un identifiant de terminal de communication : comme expliqué précédemment, cette valeur peut par exemple être représentative d'un identifiant de carte SIM ou USIM ;
- une valeur représentative de la transaction, comme par exemple le montant de cette transaction ;
- une valeur représentative d'une date et/ou d'une heure de la transaction,
- une valeur aléatoire, permettant de créer le certificat d'identification d'utilisateur en fonction d'un paramètre fournit par le terminal de communication lui-même, ou par le serveur transactionnel ; dans ce dernier cas, le nombre aléatoire est transmis par le serveur transactionnel au terminal de communication afin de permettre la comparaison ultérieure du certificat d'identification d'utilisateur et empêcher le rejeu.
- une combinaison des paramètres précédemment mentionnés, en fonction des modes de réalisation.

Ce ou ces paramètres peuvent être générés avec un échange supplémentaire avec le serveur transactionnel afin que celui-ci puisse disposer du ou des paramètres utilisés pour générer le certificat d'identification d'utilisateur et par la suite pour vérifier celui-ci. Avantageusement encore, le ou les paramètres sont tout ou partie issus d'un échange préalable (handshake) qui a lieu entre le terminal de communication et le serveur transactionnel. Ce handshake permet de déterminer des modalités d'échange entre le terminal de communication et le serveur. Il délivre des données qui sont sécurisées (comme des clés de session par exemple). A partir de ces clés de session, certains des paramètres précédents peuvent être dérivés (valeur aléatoire, fonction de création du certificat d'identification d'utilisateur, etc.). L'avantage est d'assurer que l'on ne puisse pas faire de rejeu du certificat d'identification d'utilisateur pour une autre transaction.

Le certificat d'identification d'utilisateur, créé par le document d'identité numérique utilisé pour réaliser la transaction (carte d'identité numérique, deuxième terminal de communication), est inséré, par le terminal de communication au sein d'une structure de données de transaction. L'insertion est précédée d'une étape de sélection, parmi une pluralité de champs disponibles, d'un champs spécifique existant. Il est ainsi envisageable de rendre cette sélection aléatoire, autant que de besoin. Selon une autre caractéristique, le champ spécifique au sein duquel le certificat d'identification d'utilisateur est inséré est le champ dédié à la réception du code de vérification visuel (CVV). Ainsi, au lieu de requérir la saisie de ce code par l'utilisateur (saisie qui peut poser problème, notamment sur certains sites peu regardant au niveau de la sécurité des données), on utilise ce champ pour y insérer le certificat d'identification d'utilisateur. Dans d'autres modes de réalisation, le certificat d'identification d'utilisateur est transmis en même temps que le « token » (jeton) représentant l'identification des données bancaires de l'utilisateur qui effectue le paiement. Pour mémoire, la « tokenisation » consiste à remplacer une donnée par une autre donnée sans qu'il n'y ait aucune relation entre les deux. Le « token » (ou jeton) est utilisé en lieu et place de la donnée sensible (par exemple le numéro - PAN- de la carte bancaire), c'est donc ce jeton qui est exposé aux menaces, et non la donnée sensible (donc pas le PAN). Parallèlement, une base est mise en place pour stocker les correspondances entre les données et leurs jetons correspondants, base qui est appelée « base de tokenization ». Dans le cas de figure de l'utilisation d'un « token », celui-ci est enregistré au sein du terminal de communication, par exemple à l'aide des mécanismes décrits dans le mode de réalisation suivant.

On présente par la suite, une mise en œuvre du principe exposé précédemment. Cette mise en œuvre n'est nullement limitative et toute autre mise en œuvre comprenant les mêmes caractéristiques que celles qui sont exposées est envisageable. Il est bien entendu que l'ensemble des caractéristiques et modes de réalisation décrits dans la présente sont combinables sans qu'il soit nécessaire de décrire toutes les combinaisons possibles.

Lorsque le document d'identité est un document d'identité classique (i.e. carte d'identité « simple » ou document d'identité numérique utilisé uniquement en mode normal), l'étape d'obtention du certificat d'identification d'utilisateur comprend l'utilisation d'un capteur photographique du terminal de communication et l'utilisation du processeur et de la mémoire de celui-ci pour former un certificat d'identification d'utilisateur à partir de la représentation numérique du document d'identité, obtenu via le capteur photographique. Plus particulièrement, à la place du dialogue établit entre le terminal de communication et le document d'identité numérique, on fait effectuer, au terminal de communication des opérations sur une photographie ou une vidéo du document d'identité. Ainsi, l'étape d'obtention du certificat d'identification d'utilisateur comprend :
- une étape d'obtention d'une représentation numérique du document d'identité, la représentation numérique étant une image ou une vidéo du document d'identité ;
- optionnellement, une étape de formatage de la représentation numérique, selon au moins un paramètre de formatage prédéterminé : cette étape de formatage peut correspondre à un recadrage de la photo et/ou de la vidéo pour faire en sorte que cette représentation formatée soit conforme à un cadre donné ; les modifications peuvent également comprendre des rotation, des homothéties, des translations ou toute autre transformation géométrique d'alignement de la représentation numérique sur un cadre donné ; les modifications peuvent également comprendre toute opération de modification de colorimétrie et/ou de contraste ; la représentation numérique formatée peut alors être utilisée pour en extraire une ou plusieurs informations pertinentes, lesquelles sont utilisées pour construire le certificat d'identification d'utilisateur ;

Ainsi, le procédé comprend en outre :
- une étape d'extraction, à partir de ladite représentation numérique formatée, d'au moins une donnée prédéterminée : cette extraction peut mettre en œuvre des mécanismes de reconnaissance de caractères ou de reconnaissance de motifs sur la représentation formatée ;
- une étape de calcul, à partir de la ou des données prédéterminées, du certificat d'identification d'utilisateur : ce calcul peut par exemple comprendre un calcul cryptographique, mis en œuvre à partir d'un environnement de confiance du terminal de communication, et qui permet d'obtenir une signature numérique des données prédéterminées.

Ainsi, par exemple, une photographie de la carte d'identité (ou de passeport) de l'utilisateur est réalisée. Pour faciliter la prise de vue de cette carte d'identité, un cadre est dessiné à l'écran du terminal de communication et l'utilisateur doit placer sa carte d'identité de sorte que celle-ci soit positionnée dans le cadre. Lorsque c'est le cas, le prise de vue est effectuée et une représentation numérique de la carte d'identité est chargée en mémoire. De manière optionnelle, la représentation numérique est formatée pour qu'elle « colle » à une représentation « attendue » en termes de traitement ultérieur (taille et position des logos, des caractères, etc.). La représentation (éventuellement formatée) est traitée pour en extraire les informations pertinentes (numéro de carte ou de passeport, nom, prénom de l'utilisateur, date de naissance). Les informations pertinentes sont extraites par exemple à l'aide de modules de reconnaissance de caractères et/ou de canevas de documents d'identité permettant de connaitre à l'avance l'emplacement des données pertinentes et donc d'extraire celles-ci. Une fois les données pertinentes obtenues, un traitement est effectué sur celles-ci afin de permettre l'obtention d'un certificat d'identification d'utilisateur : le traitement, de nature cryptographique, peut consister en une concaténation de ces données et en l'application d'une signature à l'aide d'une clé de chiffrement connue du terminal de communication (et du serveur transactionnel).

Selon une variante, les données ne sont pas extraites. La représentation formatée du document d'identité est utilisée en lieu et place de ces données pour produire une signature. Dès lors, la représentation formatée et la signature de celle-ci constituent le certificat d'identification d'utilisateur, qui prend place à titre de données complémentaire dans la transaction en mode CNP, comme dans les modes de réalisation précédents (token, CVV, etc.).

Selon un autre mode de réalisation, le certificat d'identification d'utilisateur est déjà à disposition d'un serveur du marchand. Plus particulièrement, comme précédemment exposé, dans le cadre d'un paiement mobile, la transaction de paiement met en œuvre une communication avec un site marchand (plateforme de commerce électronique) auquel l'utilisateur s'est connecté dans l'objectif de réaliser un ou plusieurs achats. Dans ce mode de réalisation, on suppose que la plateforme de commerce électronique a précédemment créé, en lien avec l'utilisateur, un certificat d'identification d'utilisateur. Lorsque l'utilisateur est connecté à la plateforme de commerce électronique, avant d'effectuer le paiement, la plateforme de commerce électronique est en mesure d'associer cet utilisateur avec un certificat d'identification d'utilisateur. Au moment de réaliser la transaction, tel qu'explicité précédemment, l'obtention du certificat d'identification d'utilisateur (ClUt) consiste en une transmission de ce certificat par la plateforme de commerce électronique. Cette transmission peut être réalisée de deux manières différentes au moins :
(i) en transmettant le certificat d'identification d'utilisateur directement au serveur transactionnel, sans transiter par le terminal de communication de l'utilisateur ;
(ii) en transmettant le certificat d'identification d'utilisateur au terminal de communication de l'utilisateur.

Dans le deuxième cas de figure (ii), le traitement réalisé est identique à celui précédemment décrit (insertion dans une structure de données, transmission au serveur, vérification par le serveur).

Dans le premier cas de figure (i), le traitement de la transaction au niveau du terminal de communication ne requiert pas l'insertion du certificat d'identification d'utilisateur. En revanche, le serveur transactionnel utilise le certificat d'identification d'utilisateur qu'il reçoit de la part de la plateforme de commerce électronique pour valider ou rejeter la transaction, selon des mécanismes identiques à ceux décrits dans la présente (comparaison des données du certificats/chiffrement/déchiffrement à l'aide des clés publiques/privées, etc.). Ainsi, le serveur transactionnel dispose, comme précédemment de moyens complémentaires permettant de valider ou non la transaction.

### 5.2. Description d'un mode de réalisation.

Dans ce mode de réalisation on utilise un certificat d'identification d'utilisateur obtenu, lors du paiement à l'aide du terminal de communication à partir duquel la transaction est réalisée, ce certificat d'identification d'utilisateur étant produit par la carte d'identité numérique de l'utilisateur. Pour produire ce certificat d'identification d'utilisateur, l'utilisateur est invité à poser (à approcher) sa carte d'identité numérique au dos de son terminal de communication.

Le terminal de communication comprend pour sa part un élément de sécurisation (SE, « Secure Element ») et/ou un environnement d'exécution sécurisé (TEE, « Trusted Execution Environment ») qui comprend une application spécifique (de type « Contactless Registry Event Listener » -CREL ou son équivalent en fonction de l'environnement). Ainsi, dans ce mode de réalisation, on considère que le terminal de communication héberge, au moins au travers de l'élément sécurisé (SE) (ou d'un TEE et/ USIM, SIM, UICC), au moins une application « bas niveau » en charge de la gestion des données de paiement (activation/désactivation des cartes de paiement). L'élément sécurisé dispose d'une interface de communication avec un contrôleur de communication sans contact, lequel est câblé avec l'antenne sans contact du terminal de communication. Dans ce mode de réalisation une application d'interrogation (APPINT) est mise en œuvre au sein de l'élément sécurisé. Cette application d'interrogation est appelée par une application de paiement du système d'exploitation ouvert (Android^{™}, iOS^{™}, etc.). L'Application de paiement gère le traitement, à partir de l'application bas niveau, des données nécessaires à la mise en œuvre d'un paiement (par exemple insertion des données « nom », « numéro », « date », « ccv » dans les champs prévus à cet effet). Parallèlement ou successivement, l'application de paiement requiert, auprès de l'application d'interrogation, l'obtention d'un certificat d'identification d'utilisateur. Pour requérir ce code, l'application d'interrogation peut disposer de paramètres prédéfinis ou se voir fournir des paramètres par l'application de paiement.

Après notification de l'application de paiement, la carte d'identité numérique est placée à proximité de l'antenne sans contact par l'utilisateur. L'application d'interrogation requiert l'obtention du certificat d'identification d'utilisateur en transmettant une commande idoine à la carte d'identité numérique, laquelle réalise l'opération demandée, en fonction des paramètres qui sont transférés dans la requête d'obtention du certificat d'identification d'utilisateur. Dans ce mode de réalisation, deux paramètres sont utilisés : une valeur représentative de l'identifiant du terminal et une valeur représentative de l'heure de la transaction. Ces deux valeurs représentatives sont par exemple concaténées et transmises à la carte d'identité numérique dans la requête d'obtention du certificat d'identification d'utilisateur. Les valeurs représentatives peuvent par exemple être un hash de la valeur d'origine, ou une contraction de cette valeur d'origine ou encore une extraction d'une partie de celle-ci. IL peut aussi s'agir de la valeur d'origine en tant que telle. Ceci est déterminé en fonction de la taille de données disponibles pour le paramétrage dans la requête d'obtention du certificat d'identification d'utilisateur.

Le carte d'identité numérique effectue alors le calcul certificat d'identification d'utilisateur, en fonction du ou des paramètres transmis et restitue ce certificat d'identification d'utilisateur au terminal de communication. Plus particulièrement, le contrôleur de communication sans contact reçoit et transmet, par exemple au travers d'une interface HCl *(<< Host Controler Interface »),* le certificat d'identification d'utilisateur à l'application d'interrogation qui, en fonction des mises en œuvre opérationnelles, transmet elle-même ce certificat d'identification d'utilisateur à l'application de paiement (ou bien à l'application du commerçant). Le certificat d'identification d'utilisateur est alors inséré dans la structure de données de transaction, laquelle est transmise sur le réseau de communication jusqu'au serveur, ou bien encore insérée dans une réponse de type « http » (par exemple par l'intermédiaire de services AJAX sécurisés), à destination du serveur (en ligne) du commerçant ou du serveur bancaire (du commerçant).

Comme déjà indiqué préalablement, le terminal à partir duquel la transaction est réalisée n'est pas un terminal de paiement (au sens un terminal dans lequel la carte bancaire est inséré et dans lequel un code PIN est saisi). Il s'agit d'un terminal tel qu'une tablette ou un smartphone et non pas d'un terminal de paiement tels que ceux installés chez des commerçants.

Ainsi, dans ce mode de réalisation, la méthode mise en œuvre comprend, au niveau du terminal de communication :
- une étape d'émission, à destination de ladite carte d'identité numérique dont les données sont utilisées pour la transaction, d'une requête d'obtention d'un certificat d'identification d'utilisateur ;
- une étape de réception, en provenance de ladite carte d'identité numérique, dudit certificat d'identification d'utilisateur ;
- une étape d'insertion dudit certificat d'identification d'utilisateur, au sein d'une structure de données de transaction ;
- une étape de transmission de la structure de données de transaction audit serveur ; et
- lorsque le certificat d'identification d'utilisateur reçu par ledit serveur est valide, une étape de réception d'une donnée représentative de la validation de la transaction par ledit serveur.

Lorsque le certificat d'identification d'utilisateur correspond à au moins un certificat d'identification d'utilisateur attendu, une étape de délivrance d'une donnée représentative d'une validation de transaction à une entité.

La donnée représentative d'une validation de transaction peut ensuite être fournie pour valider la transaction bancaire (cette validation de transaction bancaire est réalisée à concurrence des autres paramètres et valeurs entrant dans le processus de validation, bien entendu) à une autre entité (comme par exemple un serveur bancaire, quand la transaction en elle-même est traitée par un serveur transactionnel).

Ainsi, la méthode permet de comparer le certificat d'identification d'utilisateur produit par le document d'identité (la carte d'identité numérique) avec un certificat d'identification d'utilisateur attendu. Le format du certificat d'identification d'utilisateur attendu peut être défini par la banque de l'utilisateur, de manière automatique ou statique. Pour une définition statique, les types et la nature des paramètres sont déterminés à l'avance lors de l'encodage de l'application bas niveau d'interrogation (par exemple). Pour une définition dynamique, ces paramètres font l'objet d'échanges entre le terminal de communication de l'utilisateur et le serveur idoine (serveur transactionnel ou serveur bancaire).

### 5.3. Serveur transactionnel

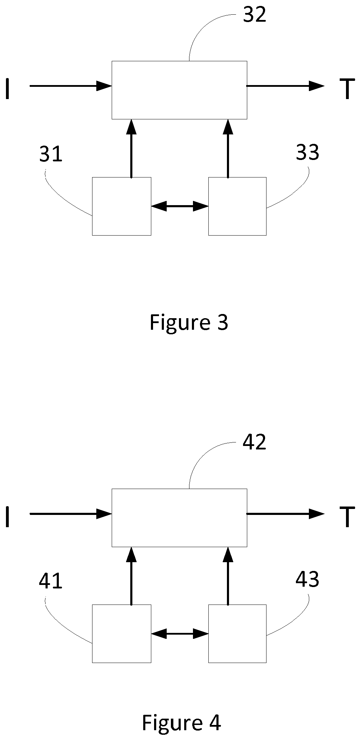

Dans au moins un mode de réalisation, la méthode décrite est mise en œuvre par l'intermédiaire d'un serveur transactionnel, présenté en relation avec la figure 3. Un tel serveur peut, au choix, être mis en œuvre par un organisme bancaire, un fournisseur de service de paiement ou un prestataire servant d'intermédiaire entre un ou plusieurs établissements bancaires ou établissements de paiements.

Un tel serveur transactionnel comprend une mémoire 31, une unité de traitement 32 équipée par exemple d'un microprocesseur, et pilotée par le programme d'ordinateur 33, mettant en œuvre le procédé selon l'invention. Dans au moins un mode de réalisation, l'invention est mise en œuvre sous la forme d'un serveur bancaire, d'un système de paiement. Un tel serveur comprend :
- des moyens de réception d'une requête transactionnelle, en provenance au moins partielle du terminal de communication, comprenant au moins un identifiant de données de paiement (token) et ou/les données bancaires elles-mêmes, le tout accompagné d'un certificat d'identification d'utilisateur ; ces moyens peuvent se matérialiser sous la forme d'une interface de connexion (I) à un ou plusieurs réseaux de communication. Il peut s'agir d'interfaces logicielles ou d'interfaces matérielles (de type carte réseau ou modules matériels de communication réseau).
- des moyens d'obtention d'une donnée de vérification de certificat d'identification d'utilisateur au document d'identité utilisé pour la transaction ; Ces moyens peuvent se matérialiser sous la forme d'une interface de connexion (I) à un ou plusieurs réseaux de communication. Il peut s'agir d'interfaces logicielles ou d'interfaces matérielles (de type carte réseau ou modules matériels de communication réseau) ; ils peuvent également se matérialiser sou la forme d'une base de données de tokenisation, lorsque cette technique est utilisée pour effectuer des paiements.
- des moyens de détermination d'un certificat d'identification d'utilisateur courant associé aux données reçues au sein de la requête transactionnelle : il s'agit par exemple de moyen de calcul d'un certificat d'identification d'utilisateur courant à partir des données reçues : en cas de réception d'un token, il s'agit de retrouver les données bancaires associées à ce token et à partir de celles-ci et des paramètres connus de calcul du certificat d'identification d'utilisateur ;
- des moyens de comparaison des certificats d'identification entre eux, en fonction des données bancaires connues de l'utilisateur ;
- des moyens de fourniture, à une entité (serveur bancaire par exemple) d'une autorisation de transaction lorsque ladite comparaison est positive. Ces moyens peuvent se matérialiser sous la forme d'une interface de connexion à un ou plusieurs réseaux de communication. Il peut s'agir d'interfaces logicielles ou d'interfaces matérielles (de type carte réseau ou modules matériels de communication réseau).

Dans au moins un mode de réalisation, un tel serveur comprend également des moyens d'obtention d'au moins une information en provenance d'un terminal de communication qui est supposé être en possession de l'utilisateur dont on souhaite valider une transaction. Dans ce mode de réalisation, ce serveur peut par exemple transmettre une requête d'obtention de cette information au terminal de communication. Pour ce faire, il peut mettre en œuvre plusieurs techniques, la première étant par exemple la transmission d'un message de type SMS à destination d'une application installée sur le terminal (c.f. Application et Terminal de communication), et ce afin de valider la transaction par rapport à un identifiant de terminal de communication connu et autorisé.

Lorsque cela est possible, le certificat d'identification d'utilisateur est issu d'un calcul réalisé avec la clé privée du document d'identité (par exemple clé privée de la carte sans contact) et les données de ce certificat d'identification d'utilisateur chiffré sont déchiffrées à l'aide de la clé publique de la carte, en possession du serveur bancaire et/ou du serveur transactionnel qui met en œuvre la présente technique. De ce fait, lorsque le serveur déchiffre le certificat d'identification d'utilisateur reçu de la part du terminal mobile il est mesure de vérifier que les données obtenues par ce déchiffrement correspondent bien à des données attendues.

### 5.4. Dispositif pour la mise en œuvre de l'invention

On présente, en relation avec la figure 4, une architecture simplifiée d'un dispositif mobile apte à transmettre sa position. Un tel dispositif mobile comprend une mémoire 41, une unité de traitement 42 équipée par exemple d'un microprocesseur, et pilotée par le programme d'ordinateur 43, mettant en œuvre le procédé selon l'invention. Dans au moins un mode de réalisation, l'invention est mise en œuvre sous la forme d'une application mobile installée sur un dispositif mobile en possession de l'utilisateur. Un tel dispositif mobile comprend :
(i) des moyens d'émission, à destination de ladite carte d'identité numérique dont les données sont utilisées pour la transaction, d'une requête d'obtention d'un certificat d'identification d'utilisateur ;
(ii) des moyens de réception, en provenance de ladite carte d'identité numérique, dudit certificat d'identification d'utilisateur ;
(iii) des moyens d'insertion dudit certificat d'identification d'utilisateur, au sein d'une structure de données de transaction ;
(iv) des moyens de transmission de la structure de données de transaction audit serveur ; et
(v) des moyens de réception d'une donnée représentative de la validation de la transaction par ledit serveur.

Ces moyens se présentent sous le forme d'une application logicielle spécifique, ou encore sous la forme de composants matériels dédiés, tel qu'un élément de sécurisation (SE) ou un environnement d'exécution sécurisé. L'élément de sécurisation peut se présenter sous la forme d'une carte Sim, USim, UICC, ou encore un composant de sécurité spécifique, greffé sur la carte mère du terminal de communication. Plus particulièrement, dans au moins un mode de réalisation, ces moyens se présentent sous la forme de plusieurs composants matériels auxquels sont adjoint plusieurs composants logiciels. Plus particulièrement, les moyens d'émission de la requête d'obtention du certificat d'identification d'utilisateur sont compris dans un composant sécurisé qui comprend un accès plus ou moins direct à un contrôleur d'émission/réception de champ électromagnétique proche de type NFC, permettant d'interroger directement un document d'identité compatible NFC. Ce composant sécurisé est en charge de la détermination au moins partielle d'un paramètre de calcul du certificat d'identification d'utilisateur. Les autres composants du terminal de communication ont fait l'objet d'une description en lien avec le mode de réalisation proposé.

## Revendications

1. Procédé de traitement d'une transaction d'un terminal de communication (ComT), sollicitant auprès d'un serveur (SrvT), par l'intermédiaire d'un réseau de communication, la mise en œuvre d'une transaction impliquant l'utilisation de données de paiement, procédé mis en œuvre au sein du terminal de communication, procédé **caractérisé en ce qu'**il comprend :
- une étape de détermination d'au moins une valeur d'au moins un paramètre de certification, ledit au moins un paramètre de certification étant lié à ladite transaction et comprenant une valeur représentative d'une date et/ou d'une heure de la transaction ;
- une étape d'insertion de l'au moins une valeur de l'au moins un paramètre de certification au sein d'une requête d'obtention d'un certificat d'identification d'utilisateur ;
- une étape d'émission (11), à destination d'une carte d'identité numérique d'un utilisateur, de la requête d'obtention d'un certificat d'identification d'utilisateur (ReqClUt), ledit certificat d'identification d'utilisateur (ClUt) étant formé à partir de ladite carte d'identité numérique en possession de l'utilisateur effectuant ladite transaction et de l'au moins une valeur de l'au moins un paramètre de certification ;
- une étape de réception (12), en provenance de ladite carte d'identité numérique, dudit certificat d'identification d'utilisateur (ClUt) ;
- une étape d'insertion (30) dudit certificat d'identification d'utilisateur (CIUt), au sein d'une structure de données de transaction (SDTr) ;
- une étape de transmission (40) de la structure de données de transaction (SDTr) audit serveur;
- et lorsque le certificat d'identification d'utilisateur reçu par ledit serveur est valide, une étape de réception (50) d'une donnée représentative de la validation (ValT) de la transaction par ledit serveur.

2. Procédé de traitement d'une transaction selon la revendication 1, **caractérisé en ce qu'**au moins un autre paramètre de certification appartient au groupe comprenant :
- un paramètre d'une fonction de création dudit certificat d'identification d'utilisateur ;
- une valeur représentative d'un identifiant d'un commerçant ;
- une valeur représentative d'un identifiant de terminal de communication ;
- une valeur représentative de la transaction.

3. Procédé de traitement d'une transaction selon la revendication 1, **caractérisé en ce que** ladite étape d'insertion dudit certificat d'identification d'utilisateur, au sein d'une structure de données de transaction comprend une étape de sélection, parmi une pluralité de champs disponibles, d'un champs spécifique existant.

4. Procédé de traitement d'une transaction selon la revendication 3, **caractérisé en ce que** le champ spécifique est le champ dédié à la réception du code de vérification visuel (CVV).

5. Procédé de traitement d'une transaction selon la revendication 1, **caractérisé en ce que** l'au moins un paramètre de certification comprend une donnée représentative d'une heure de la transaction et un autre paramètre de certification comprend une donnée représentative d'un identifiant dudit terminal de communication.

6. Procédé de traitement d'une transaction selon la revendication 1, **caractérisé en ce que** le certificat d'identification d'utilisateur (ClUt) est représentatif d'une opération de chiffrement effectué par ledit document d'identité, ladite opération de chiffrement étant effectuée par l'intermédiaire d'une communication de type NFC entre ledit terminal de communication de l'utilisateur et ledit document d'identité.

7. Serveur de traitement d'une transaction, se présentant sous la forme d'un dispositif électronique connecté à un réseau de communication, ledit serveur comprenant des moyens de réception, en provenance d'un terminal de communication, serveur **caractérisé en ce qu'**il comprend :
- des moyens de réception d'une requête transactionnelle, comprenant au moins une donnée représentative d'un paiement à effectuer à partir dudit terminal de communication et un certificat d'identification d'utilisateur, ledit certificat d'identification d'utilisateur étant formé à partir d'une carte d'identité numérique en possession d'un utilisateur effectuant ladite transaction et d'au moins une valeur d'au moins un paramètre de certification, l'au moins un paramètre de certification étant lié à ladite transaction et comprenant une valeur représentative d'une date et/ou d'une heure de la transaction ;
- des moyens d'obtention d'une donnée de vérification de certificat d'identification d'utilisateur de ladite carte d'identité numérique utilisée pour la transaction ;
- des moyens de détermination d'un certificat d'identification d'utilisateur courant associé aux données reçues au sein de la requête transactionnelle ;
- des moyens de comparaison des certificats d'identification d'utilisateur entre eux ;
- des moyens de fourniture, à une entité tierce d'une autorisation de transaction lorsque ladite comparaison est positive.

8. Terminal de communication comprenant des moyens de traitement de transactions et des moyens de sollicitation auprès d'un serveur (SrvT), par l'intermédiaire d'un réseau de communication, l'exécution d'une transaction impliquant l'utilisation de données de paiement, terminal de communication comprenant :
- des moyens de détermination d'au moins une valeur d'au moins un paramètre de certification, ledit au moins un paramètre de certification étant lié à ladite transaction et comprenant une valeur représentative d'une date et/ou d'une heure de la transaction ;
- des moyens d'insertion de l'au moins une valeur de l'au moins un paramètre de certification au sein d'une requête d'obtention d'un certificat d'identification d'utilisateur ;
- des moyens d'émission, à destination d'une carte d'identité numérique d'un utilisateur, de la requête d'obtention d'un certificat d'identification d'utilisateur, ledit certificat d'identification d'utilisateur (CIUt) étant formé à partir de ladite carte d'identité numérique en possession de l'utilisateur effectuant ladite transaction et de l'au moins une valeur de l'au moins un paramètre de certification ;
- des moyens de réception, en provenance de ladite carte d'identité numérique, dudit certificat d'identification d'utilisateur (ClUt) ;
- des moyens d'insertion dudit certificat d'identification d'utilisateur (ClUt), au sein d'une structure de données de transaction (SDTr) ;
- des moyens de transmission de la structure de données de transaction (SDTr) audit serveur ;
- et des moyens de de réception d'une donnée représentative de la validation (ValT) de la transaction par ledit serveur.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

## Patentansprüche

1. Verfahren zur Verarbeitung einer Transaktion eines Kommunikationsendgeräts (ComT), das über ein Kommunikationsnetzwerk bei einem Server (SrvT) die Durchführung einer Transaktion anfordert, die die Verwendung von Zahlungsdaten beinhaltet, wobei das Verfahren innerhalb des Kommunikationsendgeräts implementiert wird, wobei das Verfahren **dadurch gekennzeichnet ist, dass** es umfasst:
- einen Schritt des Bestimmens mindestens eines Wertes mindestens eines Zertifizierungsparameters, wobei der mindestens eine Zertifizierungsparameter mit der Transaktion verbunden ist und einen Wert umfasst, der für ein Datum und/oder eine Uhrzeit der Transaktion repräsentativ ist;
- einen Schritt des Einfügens des mindestens einen Wertes des mindestens einen Zertifizierungsparameters innerhalb einer Anfrage zum Erhalten eines Benutzeridentifikationszertifikats;
- einen Schritt des Sendens (11) des Antrags zum Erhalten eines Benutzeridentifikationszertifikats (ReqCIUt) an eine digitale Identitätskarte eines Benutzers, wobei das Benutzeridentifikationszertifikat (CIUt) aus der digitalen Identitätskarte, die sich im Besitz des Benutzers befindet, der die Transaktion durchführt, und aus dem mindestens einen Wert des mindestens einen Zertifizierungsparameters gebildet wird;
- einen Schritt des Empfangens (12) des Benutzeridentifikationszertifikats (CIUt) von der digitalen Identitätskarte;
- einen Schritt des Einfügens (30) des Benutzeridentifikationszertifikats (CIUt) in eine Transaktionsdatenstruktur (SDTr);
- einen Schritt (40) des Übertragens der Transaktionsdatenstruktur (SDTr) an den Server;
- und wenn das von dem Server empfangene Benutzeridentifikationszertifikat gültig ist, einen Schritt des Empfangens (50) eines Datenelements, das für die Validierung (ValT) der Transaktion durch den Server repräsentativ ist.

2. Verfahren zur Verarbeitung einer Transaktion nach Anspruch 1, **dadurch gekennzeichnet, dass** mindestens ein anderer Zertifizierungsparameter zur Gruppe gehört, die Folgendes umfasst:
- einen Parameter einer Funktion zum Erstellen des Benutzeridentifikationszertifikats;
- einen Wert, der für eine Kennung eines Händlers repräsentativ ist;
- einen Wert, der für eine Kommunikationsendgerät-Kennung repräsentativ ist;
- einen Wert, der für die Transaktion repräsentativ ist.

3. Verfahren zur Verarbeitung einer Transaktion nach Anspruch 1, **dadurch gekennzeichnet, dass** der Schritt des Einfügens des Benutzeridentifikationszertifikats in eine Transaktionsdatenstruktur einen Schritt des Auswählens eines bestehenden spezifischen Feldes aus einer Vielzahl verfügbarer Felder umfasst.

4. Verfahren zur Verarbeitung einer Transaktion nach Anspruch 3, **dadurch gekennzeichnet, dass** das spezifische Feld das Feld für den Empfang des Kartenprüfwerts (CVV) ist.

5. Verfahren zur Verarbeitung einer Transaktion nach Anspruch 1, **dadurch gekennzeichnet, dass** der mindestens eine Zertifizierungsparameter ein Datenelement umfasst, das für eine Stunde der Transaktion repräsentativ ist, und ein weiteres Zertifizierungsparameter ein Datenelement umfasst, das für eine Kennung des Kommunikationsendgeräts repräsentativ ist.

6. Verfahren zur Verarbeitung einer Transaktion nach Anspruch 1, **dadurch gekennzeichnet, dass** das Benutzeridentifikationszertifikat (CIUt) repräsentativ für einen von dem Identitätsdokument durchgeführten Verschlüsselungsvorgang ist, wobei der Verschlüsselungsvorgang über eine NFC-Kommunikation zwischen dem Kommunikationsendgerät des Benutzers und dem Identitätsdokument durchgeführt wird.

7. Server zur Verarbeitung einer Transaktion, der in Form einer an ein Kommunikationsnetzwerk angeschlossenen elektronischen Vorrichtung ausgebildet ist, wobei der Server Empfangsmittel von einem Kommunikationsendgerät umfasst, wobei der Server **dadurch gekennzeichnet ist, dass** er umfasst:
- Mittel zum Empfangen einer Transaktionsanfrage, die mindestens ein Datenelement, das für eine von dem Kommunikationsendgerät auszuführende Zahlung repräsentativ ist, und ein Benutzeridentifikationszertifikat umfasst, wobei das Benutzeridentifikationszertifikat aus einer digitalen Identitätskarte, die sich im Besitz eines Benutzers befindet, der die Transaktion durchführt, und aus mindestens einem Wert von mindestens einem Zertifizierungsparameter gebildet wird, wobei der mindestens eine Zertifizierungsparameter mit der Transaktion verbunden ist und einen Wert umfasst, der für ein Datum und/oder eine Uhrzeit der Transaktion repräsentativ ist;
- Mittel zum Erhalten eines Verifizierungsdatenelements des Benutzeridentifikationszertifikats der für die Transaktion verwendeten digitalen Identitätskarte;
- Mittel zum Bestimmen eines gängigen Benutzeridentifikationszertifikats, das den in der Transaktionsanfrage empfangenen Daten zugeordnet ist;
- Mittel zum Vergleichen der Benutzeridentifikationszertifikate untereinander;
- Mittel zum Bereitstellen einer Transaktionsgenehmigung an eine Drittpartei, wenn der Vergleich positiv ist.

8. Kommunikationsendgerät, das Mittel zur Verarbeitung von Transaktionen und Mittel zur Anforderung, über ein Kommunikationsnetz bei einem Server (SrvT), der Ausführung einer Transaktion umfasst, die die Verwendung von Zahlungsdaten beinhaltet, wobei das Kommunikationsendgerät umfasst:
- Mittel zum Bestimmen mindestens eines Wertes mindestens eines Zertifizierungsparameters, wobei der mindestens eine Zertifizierungsparameter mit der Transaktion verbunden ist und einen Wert umfasst, der für ein Datum und/oder eine Uhrzeit der Transaktion repräsentativ ist;
- Mittel zum Einfügen des mindestens einen Wertes des mindestens einen Zertifizierungsparameters innerhalb einer Anfrage zum Erhalten eines Benutzeridentifikationszertifikats;
- Mittel zum Senden des Antrags zum Erhalten eines Benutzeridentifikationszertifikats an eine digitale Identitätskarte eines Benutzers, wobei das Benutzeridentifikationszertifikat (CIUt) aus der digitalen Identitätskarte, die sich im Besitz des Benutzers befindet, der die Transaktion durchführt, und aus dem mindestens einen Wert des mindestens einen Zertifizierungsparameters gebildet wird;
- Mittel zum Empfangen des Benutzeridentifikationszertifikats (CIUt) von der digitalen Identitätskarte;
- Mittel zum Einfügen des Benutzeridentifikationszertifikats (CIUt) in eine Transaktionsdatenstruktur (SDTr);
- Mittel zum Übertragen der Transaktionsdatenstruktur (SDTr) an den Server;
- Mittel zum Empfangen eines Datenelements, das für die Validierung (ValT) der Transaktion durch den Server repräsentativ ist.

9. Computerprogrammprodukt, das aus einem Kommunikationsnetzwerk heruntergeladen und/oder auf einem computerlesbaren Träger gespeichert und/oder von einem Mikroprozessor ausgeführt werden kann, **dadurch gekennzeichnet, dass** es Programmcodeanweisungen zum Ausführen eines Verfahrens gemäß Anspruch 1 umfasst, wenn es auf einem Computer ausgeführt wird.

## Claims

1. A method for processing a transaction of a communication terminal (ComT) that requests a server (SrvT), via a communication network, to implement a transaction involving the use of payment data, the method being implemented within the communication terminal and the method being **characterized in that** it comprises:
- a step of determining at least one value of at least one certification parameter, said at least one certification parameter being linked to said transaction and comprising a value representative of a date and/or a time of the transaction;
- a step of inserting the at least one value of the at least one certification parameter into a request to obtain a user identification certificate;
- a step of emitting (11), to a digital identity card of a user, the request to obtain a user identification certificate (ReqCIUt), said user identification certificate (CIUt) being formed from said digital identity card which is held by the user performing said transaction and the at least one value of the at least one certification parameter;
- a step of receiving (12), from said digital identity card, said user identification certificate (CIUt);
- a step of inserting (30) said user identification certificate (CIUt) into a transaction data structure (SDTr);
- a step of transmitting (40) the transaction data structure (SDTr) to said server;
- and, when the user identification certificate received by said server is valid, a step of receiving (50) data representative of the validation (ValT) of the transaction by said server.

2. The method for processing a transaction according to claim 1, **characterized in that** at least one other certification parameter belongs to the group comprising:
- a parameter of a function for creating said user identification certificate;
- a value representative of an identifier of a merchant;
- a value representative of a communication terminal identifier;
- a value representative of the transaction.

3. The method for processing a transaction according to claim 1, **characterized in that** said step of inserting said user identification certificate into a transaction data structure comprises a step of selecting a specific existing field from among a plurality of available fields.

4. The method for processing a transaction according to claim 3, **characterized in that** the specific field is the field dedicated to receiving the card verification value (CVV).

5. The method for processing a transaction according to claim 1, **characterized in that** the at least one certification parameter comprises data representative of a time of the transaction and another certification parameter comprises data representative of an identifier of said communication terminal.

6. The method for processing a transaction according to claim 1, **characterized in that** the user identification certificate (CIUt) is representative of an encryption operation performed by said identity document, said encryption operation being performed via an NFC-type communication between said communication terminal of the user and said identity document.

7. A server for processing a transaction in the form of an electronic device connected to a communication network, said server comprising means for receiving from a communication terminal, the server being **characterized in that** it comprises:
- means for receiving a transaction request comprising at least one data representative of a payment to be performed from said communication terminal and a user identification certificate, said user identification certificate being formed from a digital identity card which is held by a user performing said transaction and at least one value of at least one certification parameter, the at least one certification parameter being linked to said transaction and comprising a value representative of a date and/or a time of the transaction;
- means for obtaining user identification certificate verification data of said digital identity card used for the transaction;
- means for determining a current user identification certificate associated with the data received within the transaction request;
- means for comparing the user identification certificates with one another;
- means for providing a transaction authorization to a third-party entity when said comparison is positive.

8. A communication terminal comprising means for processing transactions and means for requesting a server (SrvT), via a communication network, to execute a transaction involving the use of payment data, the communication terminal comprising:
- means for determining at least one value of at least one certification parameter, said at least one certification parameter being linked to said transaction and comprising a value representative of a date and/or a time of the transaction;
- means for inserting the at least one value of the at least one certification parameter into a request to obtain a user identification certificate;
- means for emitting, to a digital identity card of a user, the request to obtain a user identification certificate, said user identification certificate (CIUt) being formed from said digital identity card which is held by the user performing said transaction and the at least one value of the at least one certification parameter;
- means for receiving from said digital identity card, said user identification certificate (CIUt);
- means for inserting said user identification certificate (CIUt) into a transaction data structure (SDTr);
- means for transmitting the transaction data structure (SDTr) to said server;
- and means for receiving data representative of the validation (ValT) of the transaction by said server.

9. A computer program product downloadable from a communication network and/or stored on a computer-readable medium and/or executable by a microprocessor, **characterized in that** it comprises program code instructions for executing a method according to claim 1 when executed on a computer.
